# EUROPEAN PATENT SPECIFICATION

(11) **EP 4 435 474 B1**
(45) Date of publication and mention of the grant of the patent: **09.12.2026**
(21) Application number: 24165250.2
(22) Date of filing: 21.03.2024
(51) Int. Cl.: G01S 17/95, G01S 7/499, G01S 7/48

(54) **CLOUD PHASE DETECTION**
ERKENNUNG VON CLOUD-PHASEN
DÉTECTION DE PHASE EN NUAGE

(30) Priority: 21.03.2023 US 202318124215
(43) Date of publication of application: 25.09.2024
(73) Proprietor: ROSEMOUNT AEROSPACE INC., Burnsville, MN 55306-4898 (US)
(72) Inventor: RAY, Mark D., Burnsville, 55306 (US); ANDERSON, Kaare J., Farmington, 55024 (US)
(74) Representative: Dehns

(56) References cited:
- US-A1- 2011 019 188
- US-A1- 2021 055 422
- YONGXIANG HU: "Depolarization ratio-effective lidar ratio relation: Theoretical basis for space lidar cloud phase discrimination", GEOPHYSICAL RESEARCH LETTERS, vol. 34, no. 11, 14 June 2007 (2007-06-14), pages n/a, XP071422698, ISSN: 0094-8276, DOI: 10.1029/2007GL029584

## Description

### FIELD

This disclosure relates to cloud phase detection, e.g., for aircraft.

### BACKGROUND

Traditionally, LIDAR based ice detection systems use a calculated optical extinction, in conjunction with a calculated fourth Stokes parameter, to assess cloud phase even when a cloud is dense. Optical extinction is a parameter determined by pulsing a light emitter with very short temporal-width pulses and determining how the reflected light decays over time as the probe laser beam penetrates the cloud (e.g., observing the relative decay of the amplitude at different points of measurement.) Such high-speed pulsing and signal detection systems are expensive and complex. Without optical extinction, however, the phase of a dense cloud has traditionally been ambiguous using the fourth Stokes parameter alone, especially when the cloud is dense. Cloud phase detection systems are disclosed in US 2011/019188 A1 and US 2021/055422 A1. US2011019188A1 discloses an airborne water droplet sensor which comprises an illumination portion and a detection portion for backscattered light. The device detects the presence of airborne water droplets and provides information reflective of a profile of their diameters by measuring the lateral diffusion of a laser beam as the beam penetrates a cloud.

A single-field-of-view subsystem uses circularly polarized light to distinguish between water and ice crystals. An output of an MFOV subsystem and a single FOV subsystem are supplied to circuitry for calculating one or more parameters which are reflective of the presence of one or more of supercooled water droplets, ice and other weather conditions. The one or more parameters may comprise a ratio of the outputs.

Conventional methods and systems have generally been considered satisfactory for their intended purpose. However, there is still a need in the art for improvements. The present disclosure provides a solution for this need.

### SUMMARY

A cloud phase detection system is provided as defined by claim 1.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a cloud phase detection system in accordance with this disclosure; and
Fig. 2 is a graph showing an example of a fourth Stokes parameter plotted against a multiple scattering ratio (MSR) parameter for determination of a phase of a cloud.

### DETAILED DESCRIPTION

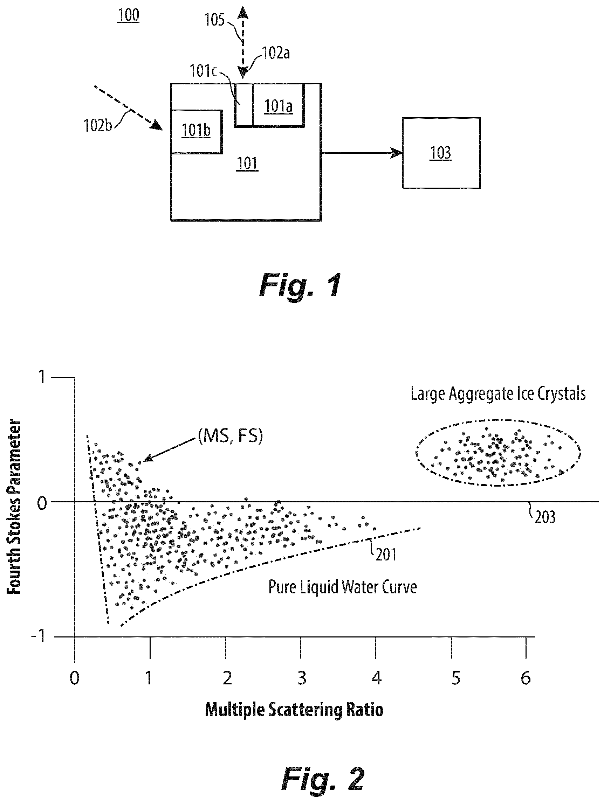

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. Certain embodiments described herein can be used for aircraft ice detection, for example. Any other suitable use is contemplated herein.

Referring to Fig. 1, a cloud phase detection system 100 includes a light receiver system 101 configured to receive reflected light from a cloud. The system 100 also includes a cloud phase module 103 operatively connected to the light receiver system 101 and configured to calculate a fourth Stokes parameter and a multiple scattering ratio (MSR) parameter based on the reflected light.

One having ordinary skill in the art in view of this disclosure and/or the disclosure of U.S. Patent Application No. 17/503,731, filed 10/18/2021, knows how to calculate the fourth Stokes parameter. For example, a light signal can be sent out with a known circular polarization and can be returned with different polarity. The fourth Stokes parameter can be computed from the amplitude of a left-hand circular component and right-hand circular polarization component in the received light.

The cloud phase module 103 is configured to determine a phase of a cloud based on a relationship between the fourth Stokes parameter and the MSR parameter. In certain embodiments, the cloud phase module 103 can be configured to use only the fourth Stokes parameter and the MSR parameter to determine the phase of the cloud (e.g., without use of an optical extinction parameter or associated equipment/algorithms).

In certain embodiments, the light receiver system 101 includes at least one on-axis light channel 101a that is configured to receive reflected light 102a that is coincident and/or parallel with a light emission axis 105 and output on-axis signals. The light receiver system 101 also includes at least one off-axis light channel 101b configured to receive off-axis reflected light 102b that is not coincident and not parallel to the light emission axis and output off-axis signals. The MSR parameter is calculated by comparing on-axis signals from the at least one on-axis channel to off-axis signals from the at least one off-axis channel.

In certain embodiments, referring additionally to Fig. 2, the cloud phase module 101 is configured to plot one or more data points of fourth Stokes parameter vs. MSR parameter in a graph (e.g., a 2-dimensional space defined by 4th Stokes parameter and MSR), and determine the phase of the cloud based on a location of the one or more data points on the graph. For example, the cloud phase module 103 can be configured to reference data point location association information to determine the phase of the cloud. The data point location association information can be defined based on physical parameters of the light receiver system 101 (e.g., locations and position of channels 101a, 101b) and/or one or more operating conditions (e.g., ambient temperature and pressure).

In certain embodiments, the cloud phase module 103 is configured to calculate the MSR parameter and reference a look up table based on the fourth Stokes parameter and the MSR parameter to determine the phase of the cloud. In certain embodiments, the cloud phase module 103 can be configured to reference the look up table additionally based on one or more operating conditions to determine the phase of the cloud (e.g., pressure, temperature). In this regard, each physical construction of a system 100 can have calibrated data to reference in any operating condition that effects results.

In certain embodiments, e.g., as shown in Fig. 2, plotting multiple points as clusters shows that phase of the water in the cloud can be determined. Certain embodiments can also determine when there are large aggregate ice crystals. For example, the cloud phase module 103 can define multiple regions on the graph that are associated with phases of a cloud. For example, a pure liquid water curve 201 can be defined such that any points along that curve 201 indicate liquid water. Points below the zero line 203 of the fourth Stokes parameter but above the curve 201 can indicate mixed phase ice and water, for example. Points above the zero line 203 can indicate pure ice phase. Points having a suitably high MSR parameter and above the zero line 203 can indicate large aggregate ice crystals for example (e.g., the data can form an island cluster as shown, but can also be defined at an empirically determined high MSR parameter).

Thus the cloud phase module 103 can find where the data points fall, and determine what region the data points are in (e.g., via a graphical chart, look-up table, or any other suitable reference data, for example). The region can correspond to one of a plurality of phases (e.g., liquid, mixed, ice, large ice crystals, etc.). The cloud phase module 103 can then output a signal indicating the determined phase of the cloud, for example (e.g., to a cockpit information display and/or an ice detection system of an aircraft to indicate icing and/or severity thereof when mixed, ice, or large crystals are detected).

In certain embodiments, the system can include a light emitter 101c (e.g., a laser). For example, the light emitter 101c can be integrated with the light receiver system and configured to output light in a light emission axis. The light emitter can transmit a beam of light with a defined divergence (e.g., as appreciated by those having ordinary skill in the art in view of this disclosure). The light emitter can be a laser transmitter, for example. To see a "blooming" of a laser spatial profile, that profile can be defined. In certain embodiments, divergences can be less than 10 mrad.

In accordance with at least one aspect of this disclosure, a system for cloud phase detection can be configured for use on an aircraft. The system for cloud phase detection can include any suitable system disclosed herein, e.g., system 100 as described above.

In accordance with at least one aspect of this disclosure, an aircraft can include a cloud phase detection system. The cloud phase detection system can include any suitable system disclosed herein, e.g., system 100 as described above.

In accordance with at least one aspect of this disclosure, a non-transitory computer readable medium can include instructions configured to cause a computer to execute a method. The method can include commanding output of a light signal from a light emitter, receiving on-axis signals indicative of on-axis reflected light, receiving off-axis signals indicative of off-axis reflected light, comparing the off-axis signals to the on-axis signals to create a multiple scattering ratio (MSR) parameter, calculating or receiving a fourth Stokes parameter, and comparing the fourth Stokes parameter and the MSR parameter to determine a phase of a cloud. In certain embodiments, comparing the off-axis signals to the on-axis signals can include adding the off-axis signals together, adding the on-axis signals together, and dividing the added off-axis signals by the added on-axis signals to create a multiple scattering ratio (MSR) parameter. The method can include any other suitable method(s) and/or portion(s) thereof.

Embodiments do not require quickly pulsing a laser or determination of an optical extinction coefficient. Embodiments instead utilize the fourth Stokes parameter and a new, different parameter (the MSR parameter). For example, there can be on-axis channels that look in the same direction as the laser beam and off-axis channels that measure light reflected back at an angle. When a cloud becomes dense, there is a blooming effect of the probe laser beam spatial profile that affects the fourth Stokes parameter but also causes light to reflect back in an off-axis direction (e.g., scatter at least partially sideways). The multiple scattering ratio (MSR) is a new parameter defined by the ratio of these signals. The numbers shown for MSR in Fig. 2 are an example and can change based on how far off-axis the detectors are located, for example, or other physical parameters of the system. Embodiments can have calibrated data (e.g., a look-up table and/or calibration table) for a specific construction of a system 100, for example. The reference data can also change based on the environmental conditions (e.g., temp, pressure, etc.).

Traditional systems use a pulsed LIDAR system and use light to determine whether there is ice or liquid in a cloud. After light reflects from a cloud, the system looks at the polarity of the light and computes the fourth Stokes parameter. Traditional systems utilize an optical extinction parameter, however, which requires complex high-speed pulsing systems, for example.

Embodiments utilize the signals in the off-axis channels compared to those in the on-axis channels to compute a multiple scattering ratio. For example, the ratio depends on the blooming of a laser beam in cloud due to multiple scattering and can be used as a proxy for optical extinction, for example. It has been shown that plots of data points in a graph of fourth Stokes vs. multiple scattering cluster themselves in a fashion that yields useful information about the cloud and reduces or eliminates the ambiguity of an increasing fourth Stokes in a purely liquid cloud of increasing density, for example. The multiple scattering ratio adds another useful cloud measurement parameter and helps to compensate for a lack of optical extinction measurement (e.g., in systems without the required hardware and/or logic). Embodiments allow similar determinations with simpler systems. Embodiments can also open the possibility of cloud particle size characterization.

Embodiments can include any suitable computer hardware and/or software module(s) to perform any suitable function (e.g., as disclosed herein). As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

## Claims

1. A cloud phase detection system, comprising:
a light emitter (101c) configured to emit light having a known circular polarization;
a light receiver system (101) configured to receive the light after reflection from a cloud; and
a cloud phase module (103) operatively connected to the light receiver system and configured to calculate a fourth Stokes parameter and a multiple scattering ratio, MSR, parameter based on the reflected light, wherein the cloud phase module is configured to determine a phase of a cloud based on a relationship between the fourth Stokes parameter and the MSR parameter;
wherein the light receiver system includes:
at least one on-axis light channel (101a) that is configured to receive reflected light that is coincident and/or parallel with a light emission axis and output on-axis signals; and
at least one off-axis light channel (101b) configured to receive off-axis reflected light that is not coincident and not parallel to the light emission axis and output off-axis signals, and wherein the MSR parameter is calculated by comparing on-axis signals from the at least one on-axis channel to off-axis signals from the at least one off-axis channel; and wherein the cloud phase module is configured to:
plot one or more data points of fourth Stokes parameter vs. MSR parameter in a graph; and determine the phase of the cloud based on a location of the one or more data points on the graph; and/or
calculate the MSR parameter and reference a look up table based on the fourth Stokes parameter and the MSR parameter to determine the phase of the cloud.

2. The system of claim 1, wherein the cloud phase module is configured to use only the fourth Stokes parameter and the MSR parameter to determine the phase of the cloud.

3. The system of claim 1 or 2, wherein the cloud phase module is configured to:
plot one or more data points of fourth Stokes parameter vs. MSR parameter in a graph; and determine the phase of the cloud based on a location of the one or more data points on the graph, and wherein the cloud phase module is configured to reference data point location association information to determine the phase of the cloud, wherein the data point location association information is defined based on physical parameters of the light receiver system and/or one or more operating conditions.

4. The system of claim 1 or 2, wherein the cloud phase module is configured to calculate the MSR parameter and reference a look up table based on the fourth Stokes parameter and the MSR parameter to determine the phase of the cloud, and wherein the cloud phase module is configured to reference the look up table additionally based on one or more operating conditions to determine the phase of the cloud.

5. A system for cloud phase detection as claimed in any preceding claim, configured for use on an aircraft.

## Patentansprüche

1. System zur Erkennung von Wolkenphasen, umfassend:
einen Lichtsender (101c), der konfiguriert ist, Licht zu emittieren, das eine bekannte zirkulare Polarisation aufweist;
ein Lichtempfängersystem (101), das konfiguriert ist, das Licht nach Reflexion von einer Wolke zu empfangen; und
ein Wolkenphasenmodul (103), das operativ mit dem Lichtempfängersystem verbunden ist und konfiguriert ist, einen vierten Stokes-Parameter und einen Mehrfachstreuungsverhältnis-, MSR-, Parameter basierend auf dem reflektierten Licht zu berechnen, wobei das Wolkenphasenmodul konfiguriert ist, eine Phase einer Wolke basierend auf einer Beziehung zwischen dem vierten Stokes-Parameter und dem MSR-Parameter zu bestimmen;
wobei das Lichtempfängersystem beinhaltet:
mindestens einen axialen Lichtkanal (101a), der konfiguriert ist, reflektiertes Licht zu empfangen, das koinzident und/oder parallel mit einer Lichtemissionsachse ist, und axiale Signale auszugeben; und
mindestens einen außeraxialen Lichtkanal (101b), der konfiguriert ist, außeraxial reflektiertes Licht zu empfangen, das nicht koinzident und nicht parallel zu der Lichtemissionsachse ist, und außeraxiale Signale auszugeben, und wobei der MSR-Parameter durch Vergleichen von axialen Signalen von dem mindestens einen axialen Kanal mit außeraxialen Signalen von dem mindestens einen außeraxialen Kanal berechnet wird; und wobei das Wolkenphasenmodul konfiguriert ist zum:
Plotten eines oder mehrerer Datenpunkte von viertem Stokes-Parameter vs. MSR-Parameter in einem Graphen; und Bestimmen der Phase der Wolke basierend auf einer Position des einen oder der mehreren Datenpunkte auf dem Graphen; und/oder
Berechnen des MSR-Parameters und Bezugnehmen auf eine Nachschlagetabelle basierend auf dem vierten Stokes-Parameter und dem MSR-Parameter, um die Phase der Wolke zu bestimmen.

2. System nach Anspruch 1, wobei das Wolkenphasenmodul konfiguriert ist, nur den vierten Stokes-Parameter und den MSR-Parameter zu verwenden, um die Phase der Wolke zu bestimmen.

3. System nach Anspruch 1 oder 2, wobei das Wolkenphasenmodul konfiguriert ist zum:
Plotten eines oder mehrerer Datenpunkte von viertem Stokes-Parameter vs. MSR-Parameter in einem Graphen; und Bestimmen der Phase der Wolke basierend auf einer Position des einen oder der mehreren Datenpunkte auf dem Graphen, und wobei das Wolkenphasenmodul konfiguriert ist, auf Datenpunktpositions-Zuordnungsinformationen Bezug zu nehmen, um die Phase der Wolke zu bestimmen, wobei die Datenpunktpositions-Zuordnungsinformationen basierend auf physikalischen Parametern des Lichtempfängersystems und/oder einer oder mehreren Betriebsbedingungen definiert sind.

4. System nach Anspruch 1 oder 2, wobei das Wolkenphasenmodul konfiguriert ist, den MSR-Parameter zu berechnen und auf eine Nachschlagetabelle basierend auf dem vierten Stokes-Parameter und dem MSR-Parameter Bezug zu nehmen, um die Phase der Wolke zu bestimmen, und wobei das Wolkenphasenmodul konfiguriert ist, auf die Nachschlagetabelle zusätzlich basierend auf einer oder mehreren Betriebsbedingungen Bezug zu nehmen, um die Phase der Wolke zu bestimmen.

5. System zur Erkennung von Wolkenphasen nach einem der vorhergehenden Ansprüche, das zur Verwendung in einem Luftfahrzeug konfiguriert ist.

## Revendications

1. Système de détection de phase nuageuse, comprenant :
un émetteur de lumière (101c) configuré pour émettre une lumière ayant une polarisation circulaire connue ;
un système récepteur de lumière (101) configuré pour recevoir la lumière après réflexion sur un nuage ; et
un module de phase nuageuse (103) connecté de manière fonctionnelle au système récepteur de lumière et configuré pour calculer un quatrième paramètre de Stokes et un paramètre de rapport de diffusion multiple, MSR, basé sur la lumière réfléchie, dans lequel le module de phase nuageuse est configuré pour déterminer une phase d'un nuage sur la base d'une relation entre le quatrième paramètre de Stokes et le paramètre MSR ;
dans lequel le système récepteur de lumière comporte :
au moins un canal lumineux dans l'axe (101a) configuré pour recevoir la lumière réfléchie coïncidente et/ou parallèle à un axe d'émission de lumière et pour émettre des signaux dans l'axe ; et
au moins un canal lumineux hors axe (101b) configuré pour recevoir la lumière réfléchie hors axe qui n'est ni coïncidente ni parallèle à l'axe d'émission de lumière et pour émettre des signaux hors axe, et
dans lequel le paramètre MSR est calculé en comparant les signaux dans l'axe provenant de l'au moins un canal dans l'axe aux signaux hors axe provenant de l'au moins un canal hors axe ; et dans lequel le module de phase nuageuse est configuré pour :
tracer un ou plusieurs points de données du quatrième paramètre de Stokes en fonction du paramètre MSR dans un graphique ; et déterminer la phase du nuage sur la base de l'emplacement des un ou plusieurs points de données sur le graphique ; et/ou
calculer le paramètre MSR et consulter une table de correspondance basée sur le quatrième paramètre de Stokes et le paramètre MSR pour déterminer la phase du nuage.

2. Système selon la revendication 1, dans lequel le module de phase nuageuse est configuré pour utiliser uniquement le quatrième paramètre de Stokes et le paramètre MSR pour déterminer la phase du nuage.

3. Système selon la revendication 1 ou 2, dans lequel le module de phase nuageuse est configuré pour :
tracer un ou plusieurs points de données du quatrième paramètre de Stokes en fonction du paramètre MSR dans un graphique ; et déterminer la phase du nuage sur la base de l'emplacement des un ou plusieurs points de données sur le graphique, et dans lequel le module de phase nuageuse est configuré pour consulter les informations d'association d'emplacement de points de données afin de déterminer la phase du nuage, dans lequel les informations d'association d'emplacement de points de données sont définies sur la base des paramètres physiques du système récepteur de lumière et/ou d'une ou plusieurs conditions de fonctionnement.

4. Système selon la revendication 1 ou 2, dans lequel le module de phase nuageuse est configuré pour calculer le paramètre MSR et se consulter une table de correspondance basée sur le quatrième paramètre de Stokes et le paramètre MSR pour déterminer la phase du nuage, et dans lequel le module de phase nuageuse est configuré pour consulter en outre la table de correspondance sur la base d'une ou plusieurs conditions de fonctionnement pour déterminer la phase du nuage.

5. Système de détection de phase nuageuse tel que revendiqué dans une quelconque revendication précédente, configuré pour être utilisé sur un aéronef.
